# FASCICULE DE BREVET EUROPEEN

(11) **EP 0 602 293 B1**
(45) Date de publication et mention de la délivrance du brevet: **02.07.1997**
(21) Numéro de dépôt: 92430034.6
(22) Date de dépôt: 07.12.1992
(51) Int. Cl.: A62D 3/00, B09B 3/00, C04B 18/04

(54) **Procédé et dispositif de traitement et de valorisation de déchets transformant ceux-ci en matériaux non polluants et réutilisables**
Verfahren und Anlage zur Behandlung und Verwertung von Abfallstoffen durch Veränderung dieser in wiederverwertbare, nicht verunreinigte Materialien
Process and apparatus for treatment and valorisation of waste by transforming in a non-polluable reusable material

(43) Date de publication de la demande: 22.06.1994
(73) Titulaire: de Blangy, Gérard, F-13480 Rognes (FR)
(72) Inventeur: De Blangy, Gérard, F-13480 Rognes (FR); Bommelaer, Jean, F-06110 Le Cannet (FR)
(74) Mandataire: Somnier, Jean-Louis

(56) Documents cités:
- EP-A- 0 427 899
- WO-A-92/21409
- DE-A- 3 909 060
- FR-A- 2 583 742
- FR-A- 2 612 427

## Description

La présente invention a pour objet un procédé et dispositif de traitement et de valorisation de déchets transformant ceux-ci en matériaux non polluants et réutilisables.

Le secteur technique de l'invention est le domaine de la réalisation d'équipements de traitements des déchets pour éviter leur stockage plus ou moins contrôlé dans des décharges.

Une des applications principales de l'invention est ainsi le traitement de déchets solides ou liquides, qu'ils soient d'origine ménagère, hospitalière, ou industrielle, en vue d'obtenir des particules utilisables dans divers matériaux de construction et/ou de génie civil, et respectant tous les critères de non pollution et les normes de protection de l'environnement et des personnes.

On connaît en effet, de nombreux procédés et équipements qui tentent de résoudre le problème de traitement des déchets pour éviter le développement de décharges qui, outre la destruction visuelle des paysages, sont des sources de pollution très graves; les déchets sont en effet de plus en plus abondants et même leur stockage en décharge est coûteux.

Le coût sans cesse croissant de ce type "d'élimination" ainsi que de toutes façons l'engorgement des sites de décharge rendent nécessaire le choix d'une solution alternative.

Dans un proche avenir, les pays industrialisés sont ainsi contraints de prendre des dispositions visant à protéger l'environnement; les décharges, telles que nous les connaissons et où s'accumulent résidus de toute nature, sont appelées à disparaître au profit de centres de traitement.

A l'heure actuelle, 65% des rejets sont ainsi déposés sans transformation dans les décharges et les 45% restants sont traités.

Il existe en fait trois catégories de familles de traitement, en dehors du compostage qui concerne cependant 10% environ des déchets, mais qui ne traite pas véritablement ceux-ci :
- l'incinération qui est la seule méthode vraiment industrialisée à ce jour à une grande échelle, et qui traite 35% des déchets, mais qui ne permet pas une véritable valorisation, même si on peut récupérer les calories utilisables dans des chauffages urbains ou collectifs : de plus, ce procédé génère, d'une part une pollution atmosphérique par rejet de gaz toxiques, et d'autre part des sous-produits de la combustion qu'il faut de toutes façons stocker et qui, dans le temps, sont également dangereux;
- la fermentation anaérobie en phase liquide de matières organiques, notamment d'ordures ménagères, dont il existe seulement quelques unités en fonctionnement, et qui permet d'une part, de produire du gaz combustible riche en méthane, et d'autre part, de récupérer un broyat qui, une fois essoré fournit de la matière combustible et du digestat qui peut être utilisé comme engrais.

On peut citer dans cette catégorie de traitement les demandes de brevet FR-A-2.577.940 publiée le 29.08.1986 et FR-A-2.551.457 publiée le 08.03.1985 déposées conjointement par les sociétés UIE et VALORGA et Messieurs DUCELLIER et PAVIA, et portant sur des procédés et installations pour la réalisation d'une dégradation en milieu anaérobie de produits, sous-produits et déchets organiques.

Cependant, cette famille de procédés nécessite une installation importante (digesteur ou fermenteur de 3.000 m³ environ au minimum) assez complexe, qui doit résister à la corrosion, et avec un apport énergétique et des additifs ainsi que des équipements de récupération et de stockage du gaz; de plus, on ne peut pas y traiter tout type de déchets; ce type de traitement a du reste du mal à se développer;
- la minéralisation accélérée par réaction chimique utilisant la chaux vive pour détruire essentiellement les matières organiques, et divers compléments de traitement, tels que par chauffage, rajout d'autres réactifs, broyage, compactage afin d'obtenir un résidu théoriquement réutilisable.

Plusieurs types de procédés ont été étudiés dans cette catégorie de traitement, dont certains ont fait l'objet de demandes de brevets, tels que celles FR-A-2.472.421 publiée le 03.07.1981 et déposée par Monsieur GERONIMO, celle FR-A-2.583.742 du 26.12.1986 par LOMA FINANCE et celle EP-A-427.899 du 22.05.1981 par la société suisse GOMACRIS, ces trois demandes citant pour inventeur Monsieur BIEZ et celle FR-A-2.612.427 du 23.09.1988 par la société suisse CATREL. Cependant aucune de ces demandes de brevets n'a fait l'objet de véritables réalisations industrielles significatives, car tous ces divers procédés de cette même famille de traitement sont en fait le résultat d'expériences empiriques, sans explication des étapes chimico-physiques ayant permis ce résultat, avec des descriptifs tenant plus de la manipulation d'alchimiste que de la rigueur industrielle; ainsi les produits obtenus n'ont pas d'une manière répétitive et pour de grandes échelles, les caractéristiques annoncées, parce que :
- d'une part, celles-ci dépendent de la composition des déchets traités, dont certains brevets imposent d'avoir par exemple au moins 30% de matière cellulosique, ce qui limite très fortement l'application de tels procédés,
- d'autre part, les traitements proposés n'éliminent en particulier ni les métaux non ferreux et/ou lourds, ni les métaux lourds sous forme de complexes organométalliques qui sont pourtant une source de pollution très importante,
- et enfin pour des raisons de mise en oeuvre, liées à l'empirisme des conditions des expériences, et qui ne permettent donc pas de véritables applications à une échelle industrielle.

La présente invention qui se situe cependant dans cette même catégorie de traitement, permet de mettre en oeuvre des procédés, d'une part, bien définis car expliqués, et donc fiables et répétitifs, et d'autre part, avec des étapes et des moyens spécifiques non enseignés ni évoqués antérieurement, et qui assurent un résultat conforme aux normes demandées, sans qu'il soit nécessaire par exemple que les déchets traités comportent une quantité minimum de matière cellulosique.

En effet, le problème posé est de pouvoir réaliser des unités de traitement de déchets solides ou liquides, qui soient d'origine ménagère, industrielle et/ou hospitalière inertée, et quelle que soit leur composition, et cela par transformation sans résidu ou déchets secondaires supplémentaires polluants, en vue d'obtenir un ou plusieurs produits inertes du point de vue chimique et bactériologique, de telle façon que les matériaux issus de ce traitement ne soient plus nécessairement disposés en décharge, mais soient réutilisables; un tel traitement doit permettre la valorisation des déchets sans risque de pollution future et avec en particulier une analyse des eaux de lixiviation des produits obtenus conformes à la réglementation en matière de teneur en métaux lourds essentiellement, et cela même avec une présence de ceux-ci au-dessus de la normale dans les déchets initiaux.

Un autre objectif de la présente invention est de pouvoir piloter et contrôler lesdites unités de traitement, afin de maîtriser le déroulement des opérations suivant un procédé technologiquement et chimiquement bien défini, qui soit industrialisable et garantisse des résultats ci-dessus, lesquelles unités de traitement doivent pouvoir être déplaçables et mobiles sur plate-formes transportables pour permettre d'effectuer les opérations de traitement sur le lieu de production des déchets, et d'éviter des transports et des manutentions coûteuses lourdes et sources de pollution.

Une solution au problème posé est un procédé de traitement et de valorisation de déchets préalablement broyés, et débarrassés de toutes parties métalliques ferreuses éventuelles, selon lequel on fait réagir le broyat obtenu après contrôle et ajustement de sa teneur en eau dans une plage donnée, par rajout d'éléments minéralisants dont au moins un oxyde d'alcalino-terreux tel que la chaux vive, et de sel d'alcalino-terreux tel que le carbonate de calcium, sous une température inférieure à celle de pyrolyse des constituants les plus sensibles à la dégradation par la chaleur, et supérieure à 130°C; suivant le procédé de l'invention :
- on malaxe en continu le broyat avec les réactifs, en assurant un mélange intime et homogène entre les composants, et en maintenant une granulométrie de ceux-ci inférieure à 1 mm;
- on rajoute de l'alumine et un dérivé d'acide silicique dans le mélange précédent, de telle façon que l'on crée sur place et dans celui-ci, des molécules cages de silicates hexahydroxylés qui piègent et séquestrent les cations métalliques, tels que ceux des métaux lourds encore présents dans le mélange.

Dans un mode préférentiel de réalisation, après avoir débarrassé les déchets de toute partie métallique ferreuse éventuelle, et avant le rajout des réactifs, on élimine les parties métalliques non ferreuses éventuelles au moyen de tout équipement basé sur l'utilisation des courants de Foucault.

Préférentiellement également, on rajoute dans le broyat un hydroxyde alcalin tel que la soude caustique pour obtenir une hydrolyse totale des produits.

De même pour améliorer le rendement et augmenter l'efficacité des réactions de minéralisation, on fait réagir préférentiellement le broyat obtenu, après élimination des parties métalliques et ajustement de la teneur en eau, successivement sur les éléments minéralisants qui sont rajoutés l'un après l'autre, dans le mélange en respectant l'ordre suivant :
- on introduit en premier dans le broyat l'oxyde d'alcalino terreux, tel que de préférence, de la chaux vive qui, au contact des déchets s'hydrate pour donner de la chaux éteinte : CaO + H₂O ...... Ca (OH)₂;
- on rajoute ensuite dans le mélange le sel alcalino-terreux, tel que de préférence, du carbonate de calcium;
- l'alumine;
- l'hydroxyde alcalin, tel que de préférence, de la soude caustique;
- le dérivé d'acide silicique, qui peut avoir des propriétés acides comme le chlorure d'acide silicique, ou des propriétés basiques comme le silicate de soude ou de potasse.

Pour répondre à l'objectif de valorisation, en fin de traitement chimique du broyat, on le déshydrate pour obtenir de la poudre et on mélange ladite poudre sèche obtenue avec un liant constitué par une résine synthétique ininflammable rendant les particules rigides imperméables.

L'ensemble des différentes étapes de procédé ci-dessus peut être réalisé avec tout équipement connu et adapté pour cela, ou avec des équipements spécifiques, mais compte tenu de l'identification de chacune de ces étapes et la possibilité et même la recommandation de les effectuer successivement dans un ordre précis, permet d'utiliser des équipements modulaires, connectables les uns derrière les autres, assurant un traitement continu des déchets et sans nécessiter donc de grande capacité du réacteur : ceci peut permettre de réaliser des dispositifs assez compacts, mobiles et transportables facilement sur les sites de traitement, ce qui est un des objectifs de la présente invention, et dont un exemple de réalisation préférentiel est décrit ci-après, et répondant aux critères définis.

Le résultat est de nouveaux procédés et dispositifs de traitement et de valorisation de déchets transformant ceux-ci en matériaux non polluants et réutilisables.

En effet, ces procédés et dispositifs répondent, d'une part aux divers inconvénients des équipements actuels connus cités précédemment, et d'autre part aux problèmes et aux objectifs définis.

Selon la présente invention, le procédé mise en oeuvre permet en effet de traiter l'ensemble des déchets, qu'ils soient ménagers, industriels ou hospitaliers inertes, sans limitation du pourcentage de matières qui le composent, ce qui n'est pas le cas de la plupart des demandes de brevets de cette même catégorie de traitement : l'invention permet notamment de pouvoir prendre en charge les boues considérées comme très polluantes, tel que les bornes de tannerie, de stations d'épuration, de l'industrie papetière par exemple.

On peut qualifier le procédé, suivant la présente invention, de minéralisation, qui est une succession de réactions complexes avec divers réactifs : en effet, les composés qui participent à l'élaboration de toute matière polluante, quelle soit organique ou non, sont extrêmement variés, et les différentes réactions alors possibles entre ces composés et les éléments minéralisants réactifs rajoutés sont également très complexes et ne peuvent être décrites individuellement; il convient de traiter donc l'aspect réactionnel sous sa forme globale telle qu'indiquée ci-après.

L'objet de l'invention est en effet de traiter les déchets de quelques origines qu'ils soient avec le même équipement industriel pouvant s'adapter à la nature et la quantité des réactifs utilisés : il est connu cependant que pour un secteur géographique défini, la composition globale des déchets peut être considérée comme relativement stable; l'analyse précise de cette composition permet alors de définir préalablement les conditions d'utilisation du dispositif suivant l'invention, les quantités et la nature des réactifs à mettre en oeuvre : il n'existe selon l'invention aucune limitation possible d'utilisation du procédé en raison des proportions des constituants; le taux des matières cellulosiques présentes dans les déchets est ainsi par exemple indifférent.

Comme indiqué précédemment, le procédé et le dispositif suivant l'invention a la possibilité d'être monté sur des plate-formes autoportées pour permettre des traitement près des sources de pollution. Les unités de traitement peuvent avoir des capacités correspondant par exemple à des productions de déchets de l'ordre de 10.000 à 250.000 équivalents habitants, grâce à un objectif de traitement de 3 à 10 tonnes/heure.

Les produits obtenus à la fin du traitement peuvent être utilisés pour la fabrication de briques et de parpaings avec un liant hydraulique ou liant de synthèse organique, la préparation d'un sol routier, le comblement de carrière, l'allégement de structures etc...

Pour démontrer l'absence de risques sur l'environnement des produits obtenus, l'analyse des eaux de lixiviation c'est-à-dire de rinçage d'une poudre de ces produits issus des déchets traités grâce au procédé et mise en oeuvre dans la présente invention, montre une qualité de protection sans commune mesure avec celle observée selon l'autre procédé.

A titre d'information, les valeurs suivantes sont obtenues par traitement de déchets ménagers en provenance d'une décharge recevant des détritus issus d'un milieu urbain :

| Teneur totale en métaux lourds | mmg/kg | Norme |
|---|---|---|
| Cd | 0,5 | 10 |
| Cu | 19 | 200 |
| Ni | 37 | 200 |
| Pb | 20 | 100 |
| Zn | 145 | 1.000 |
| Hg | 0,2 | 5 |
| Cr | 45 | 50 |

Il est à noter que, bien que ces résultats aient été obtenus sans l'élimination préalable, pourtant considérée comme une étape préférentielle du procédé des parties métalliques non ferreuses éventuelles, au moyen de tout équipement basé sur l'utilisation des courants de Foucault, on observe un taux de dépollution qui varie de 60 à 90% par apport aux concentrations initiales en métaux lourds.

On pourrait citer d'autres avantages de la présente invention, mais ceux cités ci-dessus en montrent déjà suffisamment pour en démontrer la nouveauté et l'intérêt.

La description et les figures ci-après représentent un exemple de réalisation de l'invention, mais n'ont aucun caractère limitatif : d'autres réalisations sont possibles dans le cadre de la portée et de l'étendue de la présente invention, en particulier en utilisant d'autres moyens de malaxage et d'homogénéité du broyat.

En effet, il peut être envisagé par exemple sans sortir du cadre de l'invention un traitement en cuve de grande capacité, avec un four statique mobile horizontal de préférence, et qui permettrait un traitement par lots suivant des étapes réactionnelles successives; on perdrait alors l'intérêt d'un traitement continu, qui permet de réduire la taille des équipements, afin d'avoir entre autres des unités de traitement transportables et mobiles; de plus, pour avoir un mélange parfaitement homogène, intime et de faible granulométrie, il est préférable de disposer d'un équipement suivant celui décrit ci-après.

La figure 1 est une vue schématique d'un dispositif complet suivant l'invention.

La figure 2 est une coupe transversale simplifiée d'un exemple de réacteur suivant la figure 3.

La figure 3 est une coupe en long d'un exemple de réacteur pour un traitement en continu.

En amont du dispositif de traitement et de valorisation de déchets 1, ceux-ci doivent être préalablement broyés dans tout équipement connu, telle qu'une déchiqueteuse, puis un broyeur à couteaux ou à marteaux pour ce qui concerne les déchets industriels et ménagers, et en ce qui concerne des déchets hospitaliers, ceux-ci doivent subir un traitement spécifique supplémentaire préalable pour les inerter avant leur introduction dans le dispositif suivant l'invention.

Pour cela, le broyat de tels déchets hospitaliers doit être immergé dans un réservoir contenant un désinfectant virucide et bactéricide efficace par effet tensioactif par exemple, qui permet une destruction voisine de 100% de la population microbienne fongique virale, suivant une formulation conforme aux normes telles que celles de l'Afnor, avec une efficacité anti-microbienne, bactéricide (tel que NFT 72 151 et NFT 72 171), fongicide (telle que celle définie dans la norme NFT 72 201), virucide (tel que NFT 72 181) et active sur le virus HIV1; la trémie de chargement pour de tels déchets est munie de préférence d'un tiroir obturateur placé de telle manière qu'il n'y a aucune projection possible sur les opérateurs.

Après le passage dans la cuve de désinfection ci-dessus, le broyat est alors séché et peut être injecté comme les déchets d'autre origine urbaine et/ou industrielle dans le circuit commun de transformation décrit ci-après et qui permet leur traitement.

La première phase de procédé et de traitement est de débarrasser les déchets 1, préalablement broyés de toute partie métallique ferreuse éventuelle tel que par action d'un champ magnétique suivant tout procédé connu 2.

De plus, de façon à éliminer les parties métalliques non ferreuses éventuelles et qui ne seraient pas éliminées par l'équipement précédent, le dispositif suivant l'invention comprend, avant la chambre de réaction 21, un équipement 3 basé sur l'utilisation des courants de Foucault, qui génèrent des champs d'hyper fréquences, qui rendent magnétiques et donc éliminables par attraction lesdites parties métalliques qui sont justement les éléments les plus polluants.

Préalablement à l'entrée dans la chambre de réaction 21, la teneur en humidité du broyat est mesurée, et corrigée si nécessaire, au moyen du dispositif 4 de séchage thermique, associé à un humidificateur, de façon à obtenir une teneur en eau de 10 à 40%, soit pour une quantité de déchets de 1.000 kg introduits dans le réacteur 21, un extrait sec de 600 à 900 kg, qui sert de base de référence au pourcentage des réactifs minéralisants rajoutés ci-après.

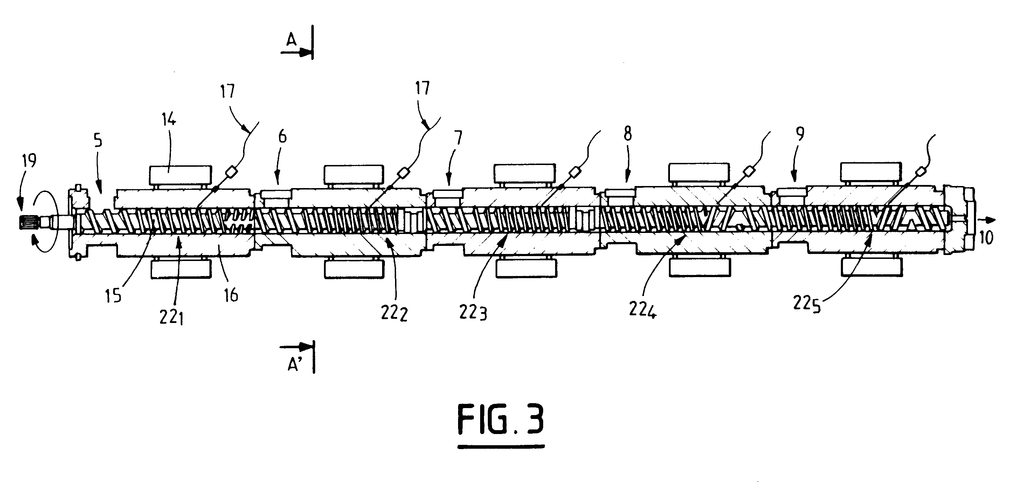

Le réacteur ou chambre de réaction 21 utilisé pour la mise en application du procédé de l'invention, peut être décrit comme étant la combinaison d'un ensemble de chambres réactionnelles 22, tel que représenté par exemple à la figure 3, chacune d'entre elles ayant un rôle indispensable dans le déroulement du processus de minéralisation.

Au cours de son cheminement dans ce réacteur 21, le broyat est homogénéisé et divisé jusqu'à l'obtention d'une granulométrie aussi fine que possible, grâce à tout moyen 20 assurant à la fois l'entraînement du broyat et le broyage de celui-ci.

La dimension des particules obtenues conditionne le temps de séjour dans le réacteur, car plus leur taille est petite, plus le temps de séjour est réduit, car la surface de réaction est alors plus importante, et le traitement à coeur des particules est plus efficace et plus rapide.

La taille maximum de granulométrie acceptable est de 1 mm, et de préférence, de 100 à 500 µ.

On introduit le broyat dans le réacteur 21, avec en premier un oxyde d'alcalino terreux, tel que la chaux vive ou réactive, en quantité adaptée à la nature des déchets à traiter, soit dans un pourcentage de 10 à 40% de l'extrait sec tel que défini précédemment; la chaux détruit alors les cellules organiques en destructurant les chaînes biopolymères.

On rajoute ensuite, dans le mélange toujours en l'homogénéisant, un sel d'alcalino terreux tel que le carbonate de calcium 6 ou de magnésium, avec éventuellement une faible proportion de chlorure du même alcalino terreux, de préférence, et de telle façon que la quantité respective sera par exemple de 5 à 10%, de l'extrait sec, en carbonate de calcium, et de 0,025% à 0,05% de cet extrait sec, pour le chlorure de calcium par exemple.

Les deux réactifs précédents assurent une bonne cohésion en complément de la chaux vive en participant à la décomposition des acides organiques pour créer des acides carboniques.

L'intérêt en effet de l'utilisation de ces réactifs est multiple, car on obtient :
- la captation des émission de gaz carboniques :

   CO₂ + H₂O ... H⁺, HCO⁻₃ + Ca(OH)₂ ... CaCO₃ + H₂O

   quand on choisit comme alcalino terreux la chaux vive.
- la captation des émissions de produits azotés issus de la décomposition de matières organiques tels que par exemple :

   Ca(OH)₂ + RNH₃Cl... CaCl₂ + RNH₃
- l'élimination des gaz polluants et malodorants avec formation de sulfate de calcium :

   Ca (OH)₂ + SO₂... CaSO₄, 2H₂O
- la neutralisation des bases présentes dans le milieu bien que cette neutralisation soit secondaire par rapport à celle obtenue ci-après par l'acide silicique :

   CaCl₂ + H₂O ... Ca(OH)₂ + HCl
- la neutralisation des acides et anhydrides car les oxydes et halogénures de métaux alcalino terreux tels que le calcium réagissement avec l'eau pour donner des hydroxydes qui sont des bases fortes :

   CaCl₂ + H₂O ... Ca(OH)₂ + AH ... H₂O + CaA₂

   ces deux dernières réactions nécessitent de rajouter par exemple du chlorure de calcium quand celui produit par la réaction de captation des émissions des produits azotés ci-dessus n'est pas en quantité suffisante.

On relève par ailleurs d'autres propriétés tel que la sulfurisation et la formation de polysulfure, et la déshydrohalogénation de certains composés qui peut être également intéressante.

A ce stade, il peut être utile d'ajouter également une faible proportion d'alumine. Cet ajout a pour effet de régulariser partiellement le pH du broyat s'il est trop élevé, mais cette caractéristique n'est pas essentielle à ce stade de la minéralisation, car la diminution du pH est obtenue par le rajout de l'acide ci-après. Cependant dans les conditions ci-dessus, grâce au rajout d'alumine, l'ion aluminate formé est à l'origine de la formation de nombreux complexes avec les sous-produits précédents, dont le plus important est le sulfo aluminate de calcium sous forme minérale.

D'autres anions tel que le chlore, le brome, les nitrates, les manganates, les chromates sont piégés pour former des complexes aluminés : la proportion d'alumine incorporée pour cela 7 représente, de préférence, entre 0,1 et 0,2% en poids de l'extrait sec défini précédemment.

Selon l'invention, on rajoute alors dans le broyat de l'hydroxyde alcalin, tel que de la soude caustique ou de la potasse, de façon à obtenir une hydrolyse totale des produits.

Pour cela, le broyat ou mélange est soumis à une température de 150 à 300°C dans la chambre d'hydrolyse 224, alors que dans les chambres précédentes, la température est maintenue élevée grâce à la réaction exothermiques des réactions chimiques ci-dessus, et qui peuvent nécessiter même d'avoir à refroidir les enceintes desdites chambres.

Cette hydrolyse basique constitue la phase finale de la minéralisation par hydrolyse de toute matière organique telle que protéines, ADN, ARN, glucides, lipides et... déjà partiellement décomposée précédemment par la chaux dans le processus réactionnel précédent.

La proportion d'hydroxyde alcalin, tel que la soude, pour cela rajoutée 8 est de 3 à 20% en poids de l'extrait sec précédemment défini.

Après cette minéralisation, on rajoute dans le mélange au moins un dérivé d'acide silicique 9 acide ou basique, tel que le chlorure d'acide silicique en proportion de 0,1 à 1% de l'extrait sec, ou le silicate de soude en proportion de 0,1 à 0,2% avec de l'acide chlorhydrique en proportion de 1 à 2% : ces composés forment avec l'eau résiduelle et l'alumine précédemment introduite et présente dans le milieu réactionnel des silico aluminates stables peu solubles dans l'eau. Cette propriété est due au fait que les silicates alcalins génèrent de l'acide ortho-silicique réagissant en milieu basique pour donner des silicates hexahydroxylés sous forme ionique : Si(OH)₄ + 2OH⁻ ... [Si(OH)₆]⁻ ⁻

Cette structure hydrique permet l'emprisonnement de cations métalliques de faible rayon atomique tel que Mg++, Al+++, Fé+++ ou de cations de métaux lourds

Cette caractéristique est essentielle et spécifique de la présente invention car elle permet de piéger les cations de faible rayon atomique, tels que ceux des métaux lourds encore présents dans le mélange, et qui n'auraient pas été éliminés lors des phases préalables 2 et 3, alors qu'ils constituent des cations dangereux pour l'environnement.

Par ailleurs l'intérêt de l'acide silicique est qu'il permet de ramener le taux de pH en général élevé comme indiqué précédemment, a une valeur inférieure à 10 et peut être même en dessous suivant le type d'utilisation envisagée pour les produits issus du procédé; de plus cet acide n'est pas dangereux car on en trouve partout, et il peut donc être rajouté en toute quantité : son ajustement par rapport à la composition des déchets et au pH voulu, peut être effectué ainsi sans problème, même en excédent pour être sûr de piéger tous les métaux lourds.

A la sortie de la chambre réactionnelle ou réacteur 21 tel que défini ci-dessus, le dispositif suivant l'invention peut comprendre un équipement de déshydratation 11, dans lequel le produit 10 en fin de traitement chimique est introduit, pour y être séché, par exemple sous vide à une température de l'ordre de 100°.

La poudre sèche ainsi obtenue peut être mélangée 12 avec un liant constitué par une résine de synthèse ininflammable tel que du polyuréthanne, qui l'imprègne de façon homogène : après ce mélange, le mortier de résine peut être passé sur une presse haute pression ou un dispositif de type boudineuse qui a pour effet de compacter le mélange en présence de liant, qui assure la cohésion et l'imperméabilisation des particules.

Les conditions d'utilisation des produits issus des déchets ainsi valorisés dictent le choix de la résine la plus économique, la plus résistante à l'hydrolyse, la moins polluante etc...

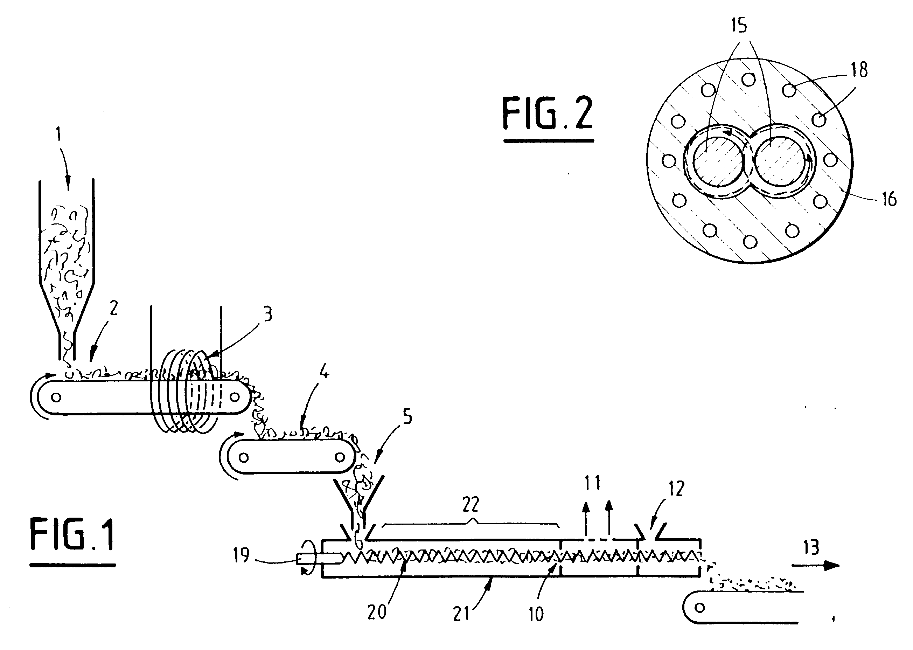

Les figures 2 et 3 représentent un exemple de réalisation d'un réacteur pour un traitement en continu permettant, d 'une part, le traitement suivant le procédé de l'invention, et d'autre part, la réalisation d'un dispositif suivant la figure 1.

Ladite chambre de réaction 21 comprend au moins une goulotte continue 16 enfermant au moins une vis d'Archimède 15, qui est entraînée en rotation par tout moyen externe 19, laquelle goulotte comprenant plusieurs chambres successives 22, à l'intérieur de chacune desquelles est injecté un desdits éléments minéralisant tels que définis précédemment en 5, 6, 7, 8, 9. Ladite vis d'Archimède 15 assure d'une part un malaxage continu, intime et homogène du broyat et de ces réactifs minéralisants rajoutés, d'autre part le maintien d'une granulométrie inférieure à 1 mm, et enfin l'entraînement du broyat depuis l'entrée 5 amont représentée à gauche sur la figure, jusqu'à la sortie 10 aval, après traitement chimique, et au delà dans les chambres de déshydratation 11 et de rajout de liant 12 tel que décrit dans la figure 1 jusqu'à l'obtention du produit réutilisable.

Sur la figure 2, qui est une vue en coupe du dispositif suivant la figure 3, ladite chambre de réaction 21 comprend deux vis d'Archimède co-rotatives 15. Ces dites vis d'Archimède sont constituées d'éléments adaptés à chaque chambre 22, puis 11 et 12, suivant le type de réaction et le type de malaxage particulier au réactif introduit.

Chacune de ces chambres peut être équipée d'un chauffage adapté aux différents besoins, tel que par système thermique externe 14, ou circulation interne 18 d'un fluide caloporteur permettant, par tout moyen d'instrumentation 17 et de contrôle desdites températures, d'ajuster celle-ci aux besoins de la réaction optimisée dans chacune des chambres.

Dans la phase préalable de mise en route d'un tel dispositif, et ensuite en cours d'exploitation, il peut être prélevé dans différentes chambres les produits des réactions obtenues en amont et en aval de celles-ci pour vérifier la complète réaction des éléments tels que définis précédemment, et permettant de rajuster éventuellement leurs proportions dans les conditions précisées ci-dessus, de façon à obtenir le résidu voulu dépollué, stable, solide et imperméable.

Avec un dispositif tel que décrit ci-dessus, la durée du traitement peut être estimée à 10 mn maximum et le fonctionnement de l'ensemble des équipements utilisés, l'entraînement des vis d'Archimède, le chauffage et/ou refroidissement essentiellement, peut être assuré d'une manière utilisant l'énergie électrique uniquement, ou l'énergie thermique ou mécanique de toute source, ou une combinaison de différentes énergies.

## Revendications

1. Procédé de traitement et de valorisation de déchets (1) préalablement broyés, et débarrassés (2) de toutes parties métalliques ferreuses éventuelles, selon lequel on fait réagir le broyat obtenu après contrôle et ajustement (4) de sa teneur en eau dans une plage donnée, par rajout d'éléments (5, 6) minéralisants, dont au moins un oxyde d'alcalino-terreux tel que la chaux vive et un sel d'alcalino-terreux tel que le carbonate de calcium, sous une température inférieure à celle de pyrolyse des constituants les plus sensibles à la dégradation par la chaleur, et supérieure à 130°C, caractérisé en ce que :
- on malaxe (20) en continu le broyat avec les réactifs, en assurant un mélange intime et homogène entre les composants, et en maintenant une granulométrie de ceux-ci inférieure à 1 mm;
- on rajoute (7) de l'alumine et (9) un dérivé d'acide silicique dans le mélange précédent, de telle façon que l'on crée sur place et dans celui-ci, des molécules cages de silicates hexahydroxylés qui emprisonnent et piègent en leur sein les cations de faible rayon atomique, tel que ceux des métaux lourds encore présents dans le mélange.

2. Procédé de traitement suivant la revendication 1, caractérisé en ce qu'après avoir débarrassé (2) les déchets (1) de toute partie métallique ferreuse éventuelle, on élimine (3) les parties métalliques non ferreuses éventuelles au moyen de tout équipement basé sur l'utilisation des courants de Foucault.

3. Procédé de traitement suivant l'une quelconque des revendications 1 à 2, caractérisé en ce qu'on rajoute (8) dans le broyat un hydroxyde alcalin tel que la soude caustique pour obtenir une hydrolyse totale des produits.

4. Procédé de traitement suivant l'une quelconque des revendications 1 à 3, caractérisé en ce qu'on fait réagir le broyat obtenu, après élimination des parties métalliques et ajustement de la teneur en eau, successivement sur les éléments minéralisants qui sont rajoutés l'un après l'autre dans le mélange, en respectant l'ordre suivant :
- on introduit (5) en premier dans le broyat l'oxyde d'alcalino terreux;
- on rajoute ensuite (6) dans le mélange le sel d'alcalino-terreux, puis
- l'alumine (7)
- l'hydroxyde alcalin (8)
- le dérivé d'acide silicique (9).

5. Procédé de traitement suivant l'une quelconque des revendications 1 à 4, caractérisé en ce qu'en fin de traitement chimique du broyat, on le déshydrate (11) pour obtenir de la poudre.

6. Procédé de traitement suivant la revendication 5, caractérisé en ce qu'on mélange (12) la poudre sèche obtenue avec un liant constitué par une résine synthétique ininflammable rendant les particules rigides et imperméables.

7. Dispositif de traitement et de valorisation de déchets (1) préalablement broyés, débarrassés de toute partie métallique ferreuse éventuelle et ayant une teneur en eau comprise dans une plage donnée, comprenant une chambre de réaction (21) permettant le rajout et la réaction d'éléments minéralisants dont au moins un hydroxyde alcalino-terreux comme la chaux vive et un sel d'alcalino-terreux tel que le carbonate de calcium, à une température supérieure à 130°C et inférieure à celle de pyrolyse des constituants les plus sensibles à la décomposition par la chaleur, caractérisé en ce que ladite chambre de réaction (21) comprend au moins une goulotte continue (16) renfermant au moins une vis d'Archimède (15) qui y est entraînée en rotation, laquelle goulotte comprenant plusieurs chambres successives (22) à l'intérieur de chacune desquelles est injecté un desdits éléments minéralisants, et ladite vis d'Archimède (15) assurant d'une part, un mélange continu, intime et homogène du broyat et de ces réactifs minéralisants rajoutés, et d'autre part, le maintien d'une granulométrie inférieure à 1 mm.

8. Dispositif de traitement suivant la revendication 7, caractérisé en ce que ladite chambre de réaction (21) comprend deux vis d'Archimède co-rotatives (15).

9. Dispositif de traitement suivant l'une quelconque des revendications 7 et 8, caractérisé en ce qu'il comprend avant la chambre de réaction (21) un équipement (3) basée sur l'utilisation des courants de Foucault qui élimine les parties métalliques non ferreuses éventuelles.

10. Dispositif de traitement suivant l'une quelconque des revendications 7 à 9, caractérisé en ce qu'il comprend après la chambre de réaction (21) un équipement de déshydratation (11).

## Claims

1. A method of processing and exploiting waste (1) that has previously been ground up and cleared of any ferrous metal parts, in which the resulting particles are checked for water content which is then adjusted (4) to lie in a given range, and are then caused to react by adding mineralizing agents (5, 6), including at least one alkaline-earth oxide such as quicklime and an alkaline-earth salt such as calcium carbonate, at a temperature exceeding 130°C and below the pyrolysis temperature for the components that are most sensitive to being degraded by heat, the method being characterized in that:
the particles and the reagents are continuously kneaded (20), ensuring that the components are intimately and uniformly mixed, while keeping the grain size thereof below 1 mm; and
alumina (7) and a derivative of silicic acid (9) is added on-site to the preceding mixture in such a manner as to create hexahydroxyl silicate cage molecules therein that capture and trap within them cations of small atomic radius, such as the cations of any heavy metals that are still present in the mixture.

2. A processing method according to claim 1, characterized in that after the waste (1) has been cleared (2) of any ferrous metal content, any non-ferrous metal content is eliminated (3) by means of any equipment based on using eddy currents.

3. A processing method according to claim 1 or 2, characterized in that an alkali hydroxide is added (8) to the particles, e.g. caustic soda, so as to obtain total hydrolysis of the products.

4. A processing method according to any one of claims 1 to 3, characterized in that the resulting particles, after the metal content has been eliminated therefrom and after the water content has been adjusted, are caused to react successively with mineralizing agents that are added to the mixture one after another in the following order:
an alkaline-earth oxide is initially added (5) to the particles;
thereafter an alkaline-earth salt is added to the mixture; then
alumina (7);
an alkali hydroxide (8); and
the derivative of silicic acid (9).

5. A processing method according to any one of claims 1 to 4, characterized in that after the particles have been processed chemically, they are dehydrated (11) in order to obtain a powder.

6. A processing method according to claim 5, characterized in that the resulting dry powder is mixed (12) with a binder constituted by a non-flammable synthetic resin that makes the particles rigid and waterproof.

7. Apparatus for processing and exploiting previously ground-up waste (1) that has been cleared of any ferrous metal content and that has a water content lying in a given range, the apparatus comprising a reaction chamber (21) enabling mineralizing agents to be added thereto and to react therewith, the agents including at least one alkaline-earth hydroxide such as quicklime and an alkaline-earth salt such as calcium carbonate, reaction taking place at a temperature that is greater than 130°C and less than the pyrolysis temperature of the components in the waste that are the most sensitive to decomposition by heat, the apparatus being characterized in that said reaction chamber (21) includes at least one continuous hopper (16) containing at last one Archimedes' screw (15) that is rotated therein, said hopper comprising a plurality of successive chambers (22) with one of said mineralizing agents being injected into each of them, and said Archimedes' screw (15) serving firstly to provide mixing that is continuous, intimate, and uniform of the particles, and of the added mineralizing reagents, and secondly to maintain a grain size of less than 1 mm.

8. Processing apparatus according to claim 7, characterized in that said reaction chamber (21) includes two co-rotating Archimedes' screws (15).

9. Processing apparatus according to claim 7 or 8, characterized in that it includes equipment (3) upstream from the reaction chamber (21), said equipment being based on using eddy currents to eliminate any non-ferrous metal content from the waste.

10. Processing apparatus according to any one of claims 7 to 9, characterized in that, downstream from the reaction chamber (21), it includes dehydration equipment (11).

## Patentansprüche

1. Verfahren zur Behandlung und Wertstoffgewinnung von Abfällen (1), die zuvor zerkleinert wurden und von allen gegebenenfalls vorliegenden eisenhaltigen Metallanteilen befreit wurden, wobei nach dem Verfahren das erhaltene zerkleinerte Produkt nach Prüfung und Einstellung (4) seines Wassergehalts in einem vorgegebenen Bereich unter Zusatz von mineralisierenden Elementen (5, 6), darunter mindestens ein Erdalkalioxid wie Calciumoxid und ein Erdalkalisalz wie Calciumcarbonat, bei einer Temperatur unter der Pyrolysetemperatur der Bestandteile, die gegenüber Zersetzung in der Wärme am empfindlichsten sind, und über 130 °C umgesetzt wird, gekennzeichnet durch folgende Schritte:
- kontinuierliches Kneten (20) des zerkleinerten Produkts mit den Reaktanden, wobei ein inniges und homogenes Gemisch zwischen den Bestandteilen gewährleistet und die Korngröße der Bestandteile unter 1 mm gehalten wird, und
- Zusatz von Aluminiumoxid (7) und einem Kieselsäurederivat (9) zu dem zuvor gebildeten Gemisch, so daß dort in dem Gemisch Käfigmoleküle von Hexahydroxy-Silicaten gebildet werden, die in ihrem Inneren Kationen von geringem Atomradius einschließen und abfangen, wie beispielsweise Schwermetallkationen, die noch in dem Gemisch vorliegen.

2. Verfahren zur Behandlung nach Anspruch 1, dadurch gekennzeichnet, daß, nachdem die Abfälle (1) von allen gegebenenfalls vorliegenden eisenhaltigen Metallanteilen befreit (2) wurden, die gegebenenfalls vorliegenden nicht eisenhaltigen Metallanteile mit beliebigen Vorrichtungen entfernt werden, die auf der Verwendung von Wirbelströmen basieren.

3. Verfahren zur Behandlung nach einem der Ansprüche 1 und 2, dadurch gekennzeichnet, daß zu dem zerkleinerten Produkt ein Alkalihydroxid wie Natriumhydroxid zugesetzt (8) wird, um die Produkte vollständig zu hydrolysieren.

4. Verfahren zur Behandlung nach einem der Ansprüche 1 bis 3, dadurch gekennzeichnet, daß das erhaltene zerkleinerte Produkt nach dem Entfernen der Metallanteile und der Einstellung seines Wassergehalts nacheinander mit den mineralisierenden Elementen umgesetzt wird, die nacheinander in der folgenden Reihenfolge zu dem Gemisch gegeben werden:
- zunächst Zusatz (5) des Erdalkalioxids zu dem zerkleinerten Produkt,
- anschließend Zusatz (6) des Erdalkalisalzes zu dem Gemisch, anschließend
- des Aluminiumoxids (7),
- des Alkalihydoxid (8), und
- des Kieselsäurederivats (9).

5. Verfahren zur Behandlung nach einem der Ansprüche 1 bis 4, dadurch gekennzeichnet, daß am Ende der chemischen Behandlung des zerkleinerten Produkts zur Herstellung eines Pulvers das Wasser entzogen wird (11).

6. Verfahren zur Behandlung nach Anspruch 5, dadurch gekennzeichnet, daß das erhaltene trockene Pulver mit einem Bindemittel vermischt wird, das aus einem nicht entflammbaren synthetischen Harz besteht und das die Partikel hart und undurchlässig macht.

7. Vorrichtung zur Behandlung und Wertstoffgewinnung von Abfällen (1), die zuvor zerkleinert wurden und von allen gegebenenfalls vorliegenden eisenhaltigen Metallanteilen befreit wurden und die einen Wassergehalt in einem vorgegebenen Bereich aufweisen, die eine Reaktionskammer (21) umfaßt, die den Zusatz von mineralisierenden Elementen, darunter mindestens ein Erdalkalihydroxid wie Calciumoxid und ein Erdalkalisalz wie Calciumcarbonat, bei einer Temperatur über 130 °C und unter der Pyrolysetemperatur der Bestandteile, die gegenüber Zersetzung in der Wärme am empfindlichsten sind, erlaubt, dadurch gekennzeichnet, daß die Reaktionskammer (21) mindestens eine kontinuierliche Rinne (16) umfaßt, die mindestens eine Archimedes-Schnecke (15) einschließt, die in Rotation gebracht wird, wobei die Rinne mehrere aufeinanderfolgende Kammern (22) umfaßt, wobei in das Innere jeder Kammer jeweils eines der mineralisierenden Elemente gegeben wird, und wobei die Archimedes-Schnecke (15) einerseits ein kontinuierliches inniges und homogenes Mischen des zerkleinerten Produkts mit den zugesetzten mineralisierenden Reaktanden gewährleistet und andererseits die Korngröße unter 1 mm hält.

8. Vorrichtung zur Behandlung nach Anspruch 7, dadurch gekennzeichnet, daß die Reaktionskammer (21) zwei gleichlaufende Archimedes-Schnecken (15) umfaßt.

9. Vorrichtung zur Behandlung nach einem der Ansprüche 7 und 8, dadurch gekennzeichnet, daß sie vor der Reaktionskammer (21) eine Vorrichtung (3) enthält, die auf der Verwendung von Wirbelströmen basiert und die gegebenenfalls vorliegenden nicht eisenhaltigen Metallanteile entfernt.

10. Vorrichtung zur Behandlung nach einem der Ansprüche 7 bis 9, dadurch gekennzeichnet, daß sie nach der Reaktionskammer (21) eine Vorrichtung zum Entwässern (11) enthält.
